# EUROPEAN PATENT SPECIFICATION

(11) **EP 1 833 294 B1**
(45) Date of publication and mention of the grant of the patent: **12.01.2011**
(21) Application number: 05807201.8
(22) Date of filing: 22.11.2005
(51) Int. Cl.: A01K 69/06

(54) **MULTIPURPOSE TRAP'S ELEMENT, CORRESPONDENT FISH TRAP AND MANUFACTURE, ASSEMBLY AND FISHING METHODS THEREOF**
MEHRZWECKFALLENELEMENT, ENTSPRECHENDE FISCHFALLE, HERSTELLUNG UND MONTAGE DAVON SOWIE FISCHVERFAHREN DAFÜR
ELEMENT DE PIEGE MULTI-USAGE, NASSE CORRESPONDANTE ET PROCEDES DE FABRICATION, D'ASSEMBLAGE ET DE PECHE

(30) Priority: 22.11.2004 PT 1000704 U
(43) Date of publication of application: 19.09.2007
(73) Proprietor: Ventura Ribeiro de Matos, Antonio, 4500-806 Espinho (PT)
(72) Inventor: Ventura Ribeiro de Matos, Antonio, 4500-806 Espinho (PT)
(74) Representative: Pelayo de Sousa Henriques, Rui
(86) International application number: PCT/IB2005/053875
(87) International publication number: WO 2006/054275

(56) References cited:
- WO-A-01/00016
- WO-A-97/05772
- FR-A- 1 350 573
- GB-A- 1 417 172
- GB-A- 2 209 262
- US-A- 3 800 464
- US-A- 4 445 295
- US-A- 4 486 973
- US-A- 5 174 059

## Description

### Area of the invention

This invention concerns a fishing device of the type of the devices that function as traps for fishes or other marine animals, attracted to the said devices by bait that is previously put therein, commonly named traps. In particular, it concerns a multipurpose element of a fishing trap, the respective trap, as well as the manufacture, assembly and fishing methods thereof.

### State of the art

The industrial fishing devices for capture of fish best known are the fishing nets. Among the various types of nets available, in the last decades have become very common the nets destined to the called trawl fishing, since they have high yield rates.

However, the medium and long term effects of the trawl fishing are devastating to the marine species that live in the sites were that type of fishing is practiced, both by the lack of selectivity of said technique and by the damaging effect that the sweep of the fishing artefacts provokes in the marine bottom, ruining the habitat of the various species (animal and vegetal) that live therein.

Consequently, the populations of many marine species have been decreasing, nearing, in many cases, the verge of extinction.

Thus, it imposes a less damaging fishing and it is necessary to develop the respective equipments.

On the other hand, the fishing with nets has the inconvenient of, in many cases, provoking the crushing of part of the captured fish, owing to the high weights involved, when the nets are full and are lifted by the winches of the fishing boats.

Therefore, it is imperious to adopt new forms of industrial fishing, namely, of fish.

As alternative to the use of nets, there are, since long, fishing artefacts, normally designated as traps, which consist in a kind of baskets for fishing. However, such artefacts have been traditionally used not so much for " the fishing of fish, but rather of other marine species, namely crustaceous, in particular lobsters, spider-crabs, crabs, shrimps and the like.

Such artefacts are described, for example, in the US Patent 5613139, that respect, in summary, to a crayfish trap, constituted by two connecting rings that connect among themselves three tubes, defining an elongated cylindrical structure to whose tops are fixed, facing the inside of the structure, some funnelled members through which the crawfish enter.

Another example is described in the Portuguese patent 75173, which respects to a trap for crustaceous that presents as a kind of basket in grid provided, in the upper part, with an opening of frusto-conical shape, facing the inside of the trap, through which the crustaceous enter.

In GB 1417172 is described an improved trap for lobsters, constituted by a plastic cage in grid of frusto-conical shape, provided, in the smaller base - that corresponds to the part that is destined to be facing up when the device is in operation in the bottom of the ocean - with a funnelled entrance facing the inside of the basket that is opened in its bigger base and co-operates with a closing panel, being foreseen flitting means between this and the said basket; and

On the other hand, in WO97/05772 and in US3800464, are described small traps for fishes. In the first case, the body of the trap is divided in two parts, being substantially closed, except for some small perforated zones, being essentially in question the manufacture method of that device, by blow injection. In the second case, the trap is of a rather complex assembly, since it involves an internal net that is firstly fixed to two rings, that set being subsequently fixed to an external rigid structure, the set being finalised by two funnelled parts fixed to the tops of the trap and facing its inside, one of them, at least, being removable, so that it functions as a lid; it is destined to deposit the captured fish rapidly and without inflicting any damage in the scales, in order to avoid that, once in captivity, the captured fish develops diseases from the suffered lesions, thus increasing its market transaction value.

In WO01/00016 is described a manufacture method of traps generically traditional for crabs, provided with a metallic frame on which is fixed a net, the binding being made, in the described case, through individual coupling means that substitute the traditional lock rope of the net to the frame.

All the aforementioned devices are destined to be deposited in the bottom of the ocean or of the other places where is intended to fish with them. On the other hand, it results from the analysis of the correspondent descriptions that, in general, the artefacts that aim the fishing of crawling crustaceous have the funnelled entrances disposed in the upper part, while the artefacts that aim the fishing of fishes or of crustaceous that swim have the funnelled entrances disposed laterally. The said funnelled entrances are always facing the inside of the trap, that is, with the smaller opening placed more interiorly to the trap than the correspondent bigger opening.

In light of the mentioned, it is verified that, for a sustainable industrial fishing of fish, there is a need for devices alternative to the traditional nets, namely to the' trawl nets, such devices being able to allow a more selective fishing, both on the level of the captured species and in terms of the sizes of the respective specimens, avoiding to damage the aquatic habitat in question - namely the bottom of the ocean - and eliminating the phenomenon of the crushing of the captured species.

On the other hand, it is necessary that such devices have a simple manufacture method, including an easy and fast assembly - preferentially using a reduced number of different types of components - and that they present a practical and effective operation mode, either in what concerns the capture or regarding the easiness of unloading the captured species.

### Objectives of the invention

The present invention concerns a trap's multipurpose element, the fishing traps comprising that element and the manufacture, assembly and fishing methods thereof, element and methods that - within what's possible - fulfil, in particular, the aforementioned requirements.

Another objective consists in making the said trap resistant and durable, namely bearing in mind the demanding environmental conditions of the medium in which it is going to be used, especially in the case of the use in the marine medium.

Other objectives will derive from the reading of the description of the invention that follows.

### Description of the invention

According to the invention, the trap's multipurpose element is a reticular and funnelled element **characterised in that** it comprises, in the side of the bigger base, a collar provided with two opposed perimetric channels, collar that serves of element of structural reinforcement of the trap that includes that element.

Regarding the present invention, the description of the same and the correspondent claims, by funnelled element, is understood an element that corresponds essentially to a substantially conic or frusto-conical shape surface (alternatively substantially pyramidal or frusto-pyzamidal shape), that is, an element substantially hollow with divergent walls in a sense and convergent in the opposite sense.

According to a preferential embodiment, such element is provided, in the narrower extreme, with a compact reinforced zone that allows the fastening of means destined to fasten the cables.

The manufacture method of the cited trap's element, which is also a part of the invention, is **characterised in that** the element is produced, in plastic material, by injection in a mould.

The compact reinforced zone, besides the above indicate functional characteristic in relation to the correspondent trap's element, also performs a function during the manufacture method, since it acts as a kind of filling/distribution chamber that helps to guarantee the correct filling of the mould when that trap's element is injected, filling to which are opposed both the dimensions of the element to mould and its geometry, reticular.

According to another preferential embodiment the referred element is alternatively provided, in the narrower extreme, with an opening.

According to a preferential embodiment of the manufacture method, this element provided with opening is produced from the other mentioned previously, by means of a subsequent step in which the tip of this is cut perimetrically all around, removing the correspondent reinforced zone, in order for the funnelled surface to define, in the narrowest part, the said opening.

In turn, the trap according to the invention which, such as the traditional ones, is provided with a reticular body fixed in one of the tops to a funnelled reticular piece disposed facing the inside of the said body - piece that functions as entrance to the fished species - is **characterised in that** the reticular funnelled piece is a multipurpose element (with opening) with the innovating characteristics indicated above and in that the body is fixed in the perimetric channel of the respective collar facing the side of the said opening.

Additionally, the cited reticular body is fixed, in the other top, to a second multipurpose element reticular and funnelled according to the invention, element that preserves the compact reinforced zone of the tip and disposed facing the outside of the same body, the fastening between the body and that multipurpose element being made in the perimetric channel of the respective collar facing the side of the larger opening of that same element.

The manufacture method of the said trap, which is also part of the invention, is **characterised in that** a multipurpose element (provided with opening) according to the invention is fixed to the body of the trap, facing the inside of the trap, making an extreme of the body to lodge in a first channel of the collar of structural reinforcement of the said element and fixing it in there - preferentially by way of rapid fastening means - and in that another multipurpose element (this one maintaining the compact reinforced zone of the tip) is fixed to the same body, facing its outside, making the other extreme of the body to lodge in a second channel of the collar of this other multipurpose element and fixing it in there - preferentially also by way of rapid fastening means.

In turn, the fishing method according to the invention is **characterised in that** a trap according to the invention is firstly suspended vertically, hung at the desired depth and without resting on the bottom, by way of cables fastened at the respective fastening means and/or to the collar of structural reinforcement of the multipurpose element provided with such means, being left there for a determined period in order to allow the species to be fished (attracted by the bait) to enter in the trap through the opening existent in the other multipurpose element, remaining retained in there - except in what concerns the specimens that, by their reduced size, manage to escape by a small permanent escape way opening duly dimensioned - and in that, afterwards, once expired the period considered adequate, the trap is lifted on board of a vessel, the captured fished species being dumped either by a window existent in the body, or by an opening and closing discharge mouth, once this is opened and the trap is turned up side down, mouth existent accordingly to one of the preferred embodiments of the multipurpose elements according to the invention.

### Brief description of the drawings

This invention will be described afterwards with more detail based on the enclosed drawings, where, as mere non imitative illustrations, is represented a trap according to the invention, in a case where was adopted the cylindrical configuration for the respective body and the frusto-conical shape for the respective multipurpose elements.

Figure 1 constitutes a perspective view of the mentioned trap, having marked on the right - by two circles - two zones correspondent to the detail views represented in Figures 2 and 3.

Figure 2 represents a detail view, in cut, simplified, of the interconnection between the body of the trap and the multipurpose element disposed facing the outside of the body and fixed to one of its tops.

Figure 3 represents a detail view, in cut, simplified, of the interconnection between the said body of the trap and the other multipurpose element, this one being fixed - in the position of facing the inside of the body - to the other top of the same body.

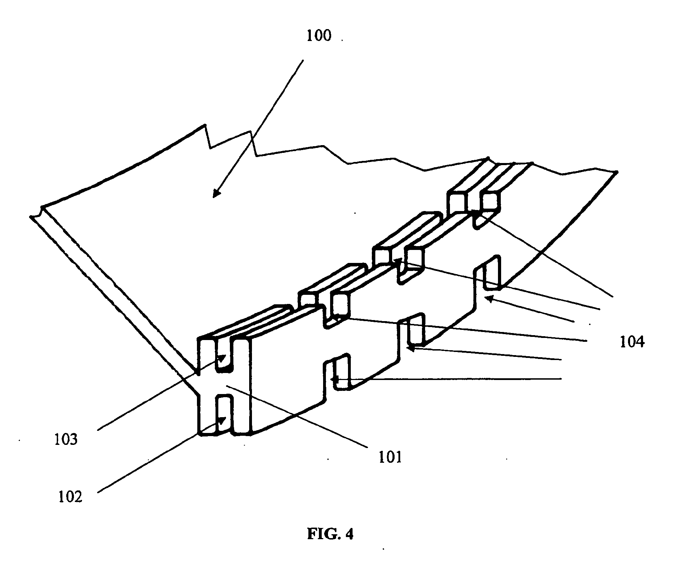

Figure 4 represents a perspective detail view of the zone of the collar of reinforcement of a multipurpose element according to the invention.

### Description of an embodiment

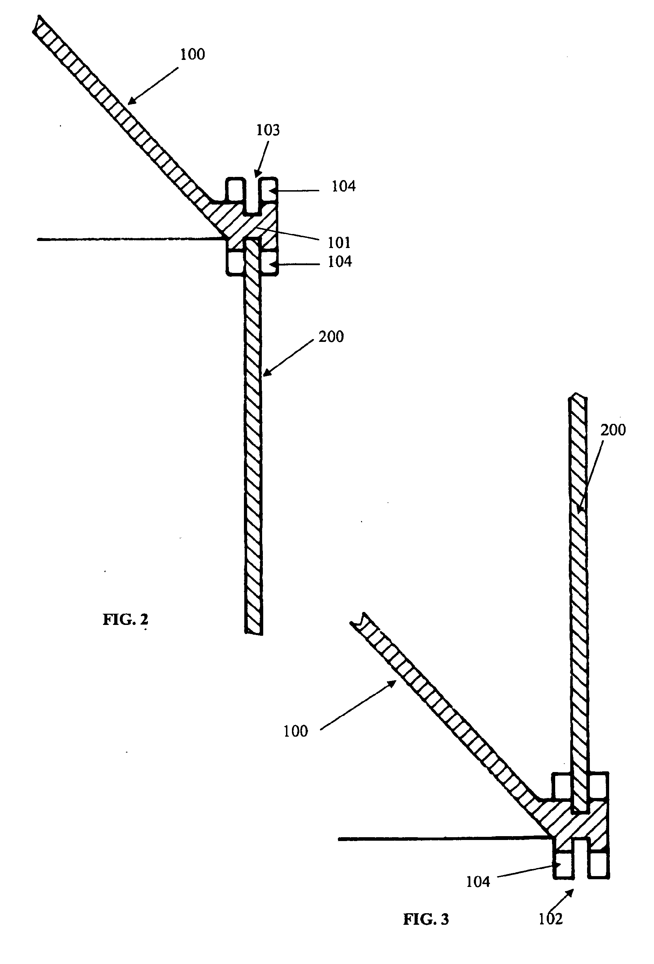

According to the particular embodiment represented in such figures, the trap's multipurpose element (100) - as is visualised, in particular, in Figure 3 - besides having a collar (101) of structural reinforcement provided with two opposed perimetric channels (102, 103) comprises also, spaced apart, grooves (104) that lower the edges defining the said perimetric channels (102, 103).

In Figures 2 and 3 are visualised aspects of the trap and, in particular, of the fastening of the correspondent body (200) to the respective multipurpose elements (100), through the insertion of the tops of that body in the correspondent channels. In these figures, the bodies, by simplification, were represented in cut as if they were continuous when, in reality, they are reticular. Preferentially the body (200) will be made in conventional plastic net; the multipurpose elements (100) being, also preferentially, in plastic, and, according to a particularly preferential embodiment, manufactured by injection.

According to a particular embodiment of the invention, the fastening of the body (200) in the perimetric channels of the multipurpose element (100) is made by way of rapid fastening means inserted in the grooves (104), means that for simplification are not represented in the figures.

Examples of rapid fastening means are, concretely, the rapid auto-blocking tie wraps, very vulgarised in the fastening of bundles of cables, normally named nylon tie wraps.

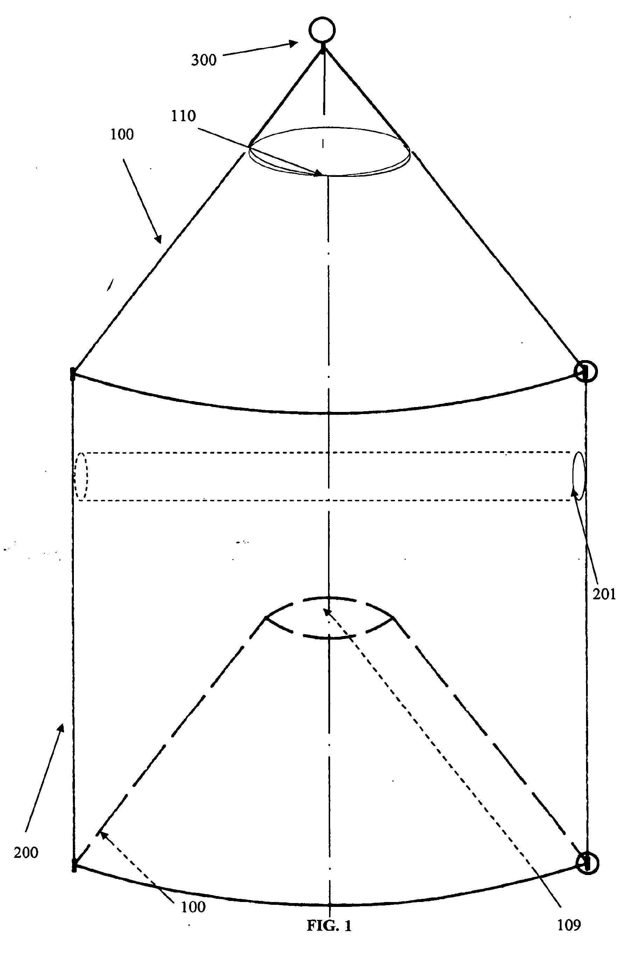

According to another particular embodiment of the invention, the multipurpose element (100) provided with the compact reinforcement zone that allows the fastening of the means (300) destined to fasten the cables of the trap, is provided, near the narrower extreme, but out of the said compact reinforce zone, with an opening and closing discharge mouth (110) of, represented in simplified way in Figure 1.

The said means destined to fasten the cables are known by themselves and resort, usually, to a ring or similar element. The fastening to the said compact reinforced zone will also be of the conventional type.

According to a particular embodiment of the invention, the multipurpose element (100) provided with the discharge mouth (110) will be obtained from the basic multipurpose element through a subsequent step in which that element is cut perimetrically, almost all around, and the mouth (110) thus defined is reinforced, for example with two rings.

According to the particular embodiment represented in Figure 1, the trap is provided with a tubular reticular sheath (201) for insertion of a reticular tube of inferior section, with bait. This embodiment allows recharging very rabidly with bait the traps after the discharge of the captured species, accelerating its replacement in operation.

Another particular embodiment - this one not represented in the figures - results from providing the opening (109) with a reducer cap and/or with flexible fingers. These, by their flexibility, allow the entrance of the species to be fished, opening to give it entrance, stopping afterwards its exit, by closing by action of the respective elasticity.

According to other preferential embodiments, there will be in the trap a discharge window that opens and closes. That window or another specially foreseen will have as preferential characteristic the fact that the closing elements or at least a relevant part of the same is (bio)degradable in time, allowing, in case the trap is lost, falling on the bottom of the ocean - for example by accidental cut of the respective cables - the captured species imprisoned there to come out freely by the window after a predetermined period (once the closing elements have deactivated after that period).

Likewise, preferentially, the trap will be provided with one or more permanent escape ways for the smaller ones. That opening may be regulated opening more or less the escape way, according to the intended, bearing in mind, namely, the specific fishing regulation in force at the operation site, by the use of an overlaying covering of adequate size.

The trap according to the invention and the correspondent fishing method reveal particularly adequate for the deep water fishing, namely in high sea.

Other embodiments are possible and easily identifiable by the one skilled in the art, and must as such be considered included in the scope of the invention.

## Claims

1. Multipurpose fishing trap's element (100), reticular and funnelled, **characterised in that** comprises, in the side of the bigger base, a collar (101) of structural reinforcement provided with two opposed perimetric channels (102, 103).

2. Element according to claim no. 1, **characterised in that** the collar (101) comprises, spaced apart, grooves (104) that lower the edges defining the perimetric channels (102, 103).

3. Element according to claim no. 1, **characterised in that** in the narrower extreme is provided with a compact reinforced zone that allows the fastening of means (300) destined to fasten the cables.

4. Element according to claim no. 3, **characterised in that**, near the narrower extreme, but out of the compact reinforced zone, is provided with an opening and closing discharge mouth (110).

5. Element according to claim no. 1, **characterised in that** in the narrower extreme is provided with an opening (109).

6. Manufacture method of the multipurpose element (100) mentioned in claim no. 3, **characterised in that** it is produced, in plastic material, by injection in a mould.

7. Manufacture method according to claim no. 6, **characterised in that** the multipurpose element (100) mentioned in claim no. 4 is produced by means of a subsequent step in which the multipurpose element (100) mentioned in claim no. 3 is cut perimetrically, almost all around, and the mouth (110) thus defined is reinforced with two rings.

8. Manufacture method according to claim no. 6, **characterised in that** the multipurpose element (100) mentioned in claim no. 5 is produced by means of a subsequent step in which the tip of the multipurpose element (100) referred in claim no. 3 is totally cut, including the correspondent reinforced zone, so that the funnelled surface defines, in the narrower part, an opening (109).

9. Fishing trap, provided with a reticular body (200) fixed in one of the tops to a reticular funnelled piece (100) disposed facing the inside of such body (200) - piece that serves as entrance to the species to be fished - **characterised in that** the funnelled reticular piece (100) is a multipurpose element according to claim no. 5 and **in that** the body (200) is fixed to the perimetric channel (103) facing the side of the opening (109).

10. Fishing trap according to claim no. 9, **characterised in that** the reticular body (200) is fixed, in the other top, to a second multipurpose element (100) reticular and funnelled, element accordingly to any of the claims nos. 3 or 4, and disposed facing the outside of such body, the fastening between the body and the multipurpose element being made in the perimetric channel (102) facing the side of the wider opening of that element.

11. Fishing trap according to claim no. 9 or 10, **characterised in that** the fastening of the body (200) in the perimetric channels of the multipurpose element (100) is made by way of rapid fastening means inserted in the grooves (104).

12. Fishing trap according to any of the claims nos. 9 to 11, **characterised in that** the opening (109) is provided with a reducer cap and/or with flexible fingers.

13. Fishing trap according to any of the claims nos. 9 to 12, **characterised in that** has a tubular reticular sheath (201) for insertion of a tube of inferior section with bait.

14. Assembly method of trap, **characterised in that** a multipurpose element (100) according to claim 5 is fixed to the body (200) of the trap, facing this one's inside, making an extreme of the body to lodge in a first channel (103) of the collar (101) of structural reinforcement of the said element and fixing it there by way of rapid fastening means inserted in the grooves (104) and **in that** a multipurpose element (100) according to claim 3 or 4 is fixed to the said body (200), facing the outside of this one, making the other extreme of the same body to lodge in a second channel (102) of the collar (101) of this multipurpose element and fixing it in there by way of rapid fastening means inserted in the grooves (104).

15. Fishing method, **characterised in that** a trap according to claims 9 and 10 is firstly suspended vertically, hung at the desired depth and without resting on the bottom, by way of cables fastened to the respective fastening means (300) and/or to the collar (101) of structural reinforcement of the multipurpose element (100) provided with such means, being left there for a determined period of time in order to allow the species to be fished - attracted by the bait - to enter the trap through the opening (109), being retained there, except in what concerns the specimens that, by their reduced size, manage to escape by a small permanent escape way opening duly dimensioned, and **in that**, afterwards, once the time considered adequate expires, the trap is lifted on board of a vessel, the captured species being dumped either by a window existent in the body (200), or by the discharge mouth (110) that opens and closes, once this is opened and the trap is turned up side down.

## Patentansprüche

1. Netz- und trichterförmiges Mehrzweckelement (100) - eine Art von Fangkorb für die Fischerei - das, an der Seite der grösste Grundfläche durch einen strukturellen Versteifungskragen (101), versehen mit zwei entgegengesetzten perimetrischen Kanäle (102, 103) **gekennzeichnet** ist.

2. Element nach Anspruch 1, **dadurch gekennzeichnet, dass** den Kragen (101) aus Einschnitten (104) in Abständen entlang der Länge besteht, und diese Einschnitten die darstellend Rände der perimetrischen Kanäle (102, 103) nachsetzen.

3. Element nach Anspruch 1, **dadurch gekennzeichnet, dass** es am engsten Ende mit einer dichte versteifend Fläche versehen ist, die die Befestigung von Mitteln (300) für die Ankerkettensfestsetzen erlaubt.

4. Element nach Anspruch 3, **dadurch gekennzeichnet, dass** es nächst dem engsten Ende, aber ausser der dichte versteifend Fläche, mit einer auf und zu Auslauföffnung (110) versehen ist.

5. Element nach Anspruch 1, **dadurch gekennzeichnet, dass** es am engsten Ende mit einer Öffnung (109) versehen ist.

6. Herstellungsverfahren des Mehrzweckelements (100) - dieses letzte ist im Anspruch 3 bevorgenannt - **dadurch gekennzeichnet, dass** es aus Kunststoff durch Injektion auf einem Muster hergestellt wird.

7. Herstellungsverfahren nach Anspruch 6, **dadurch gekennzeichnet, dass** das im Anspruch 4 bevorgenanntes Mehrzweckelement (100) dank einer nachstehende Phase hergestellt wird, in der das im Anspruch 3 bevorgenanntes Mehrzweckelement (100) perimetrisch, fast völlig geschnitten wird, und danach wird seine Öffnung (110) mit zwei Ringen dargestellt und versteift.

8. Herstellungsverfahren nach Anspruch 6, **dadurch gekennzeichnet, dass** das im Anspruch 5 bevorgenanntes Mehrzweckelement (100) dank einer nachstehende Phase hergestellt wird, in der die Spitze des Mehrzweckelements (100) - dieses ist im Anspruch 3 bevorgenannt - völlig geschnitten wird, einschliesslich die entsprechend versteifende Fläche, so dass die trichterförmige Oberfläche am engsten Platz eine Öffnung (109) darstellen kann.

9. Fangkorb, versehen mit einen netzförmigen Körper (200), dieser auf eine der beiden Oberseiten durch ein netz- und trichterförmige Teil (100) befestigt, indem es nach innen solches Körpers (200) umgedreht ist - dieses Teil dient als Einsatz für die Fischerei - und der Körper, **dadurch gekennzeichnet, dass** nach Anspruch 5, das netz- und trichterförmige Teil (100) ein Mehrzweckelement ist, und der Körper (200) im perimetrischeren Kanal (103), zu der Öffnungsseite (109) umgedreht, befestigt wird.

10. Fangkorb nach Anspruch 9, **dadurch gekennzeichnet, dass** den netzförmigen Körper (200) auf der andere Oberseite durch ein zweites netz- und trichterförmige Mehrzweckelement (100) befestigt ist, dieses nach irgendein der Ansprüche 3 oder 4, wird ausser diesen Körper umgedreht, so dass die Befestigung in die Stelle zwischen Körper und Mehrzweckelement auf dem perimetrischeren Kanal (102), in der Richtung der breitste Öffnungsseite solches Element, gemacht werden kann.

11. Fangkorb nach Ansprüche 9 oder 10, **dadurch gekennzeichnet, dass** die Körperbefestigung (200) auf den perimetrischeren Kanäle des Mehrzweckelements (100), durch schnelle Befestigungsmitteln in Einschnitten (104) eingeführt, gemacht wird.

12. Fangkorb nach irgendeinen der seit Ansprüche 9 bis 11, **dadurch gekennzeichnet, dass** die Öffnung (109) mit einer eingeschränkte Mütze und/oder mit biegsamen Fingern versehen wird.

13. Fangkorb nach irgendeinen der seit Ansprüche 9 bis 12, **dadurch gekennzeichnet, dass** es einen röhren- netzförmigen Saum (201) für die Einführung eines Unterschnittsschlauch mit Köder gibt.

14. Verfahren des Fangkorbseinbaues, **dadurch gekennzeichnet, dass** ein nach Anspruch 5 Mehrzweckelement (100) an den Körper (200) des Fangkorbes festgesetzt wird, und nach innen dieses umgedreht, so dass ein Ende des Körpers auf einem ersten Kanal (103) des strukturellen versteifend Kragen (101) im bevorgenannten Element liegt, dort wird das Ende des Körpers durch schnelle Befestigungsmitteln in Einschnitten (104) eingeführt und durch ein Mehrzweckelement (100) festgesetzt werden, nach Anspruch 3 oder 4, wird dieses Element an dem genannten Körper (200) festgesetzt, nach aussen dieses umgedreht, und daher lässt das andere Ende des selben Körpers in einem zweiten Kanal (102) des Kragens (101) dieses bevorgenannten Element dort liegen, es ist gemacht durch schnelle Befestigungsmitteln in Einschnitten (104) eingeführt.

15. Fischereiverfahren, **dadurch gekennzeichnet, dass** einen nach Ansprüche 9 und 10 Fangkorb zuerst senkrecht hängt, in der gewünschte Tiefe aufhängt und nicht auf den Boden hinlegt, der Fangkorb hängt an Ankerketten mit den entsprechenden Befestigungsmitteln (300) und/oder mit dem strukturellen versteifend Kragen (101) des Mehrzweckelements (100) versehen, mit solchen Mitteln befestigt, der Fangkorb hängt dort so lange wie benötigt, so dass die Fischerei - auf den Köder angezogen - in den Fangkorb durch die Öffnung (109) hineingeht, und dort bleiben müsst, Ausnahme sind die Fische, die so klein sind, dass es für sie möglich ist, durch eine bleibend kleine rechtskräftigt dimensionierte Ausfluchtsöffnung nach aussen fliehen, später, so bald die anbetracht angemessene Zeit zu Ende ist, der Fangkorb wird an Bord eines Schiffes gehisst, indem die Fischerei durch ein Fenster im Körper (200) bestehend entleert wird, die Entleerung passiert durch die auf und zu Auslauföffnung (110), sobald diese geöffnet ist, und gleichzeitig den Fangkorb umgekehrt wird.

## Revendications

1. Elément multi-usage (100) de nasse, réticulé et progressivement rétréci, **caractérisé en ce qu'**il comprend, dans le côté de la base la plus large, un collier (101) de renforcement structurel avec deux canaux périmétriques opposés (102, 103).

2. Elément selon la revendication no. 1, **caractérisé en ce que** le collier (101) comprend des rainures (104), espacées entre elles, qui abaissent les bords définissant les canaux périmétriques (102, 103).

3. Elément selon la revendication no. 1, **caractérisé en ce que** dans l'extrême le plus étroit il est pourvu d'une zone compacte renforcée qui permet la fixation de moyens (300) pour la fixation des câbles.

4. Elément selon la revendication no. 3, **caractérisé en ce que**, près de l'extrême le plus étroit, mais hors de la zone compacte renforcée, il est pourvu d'une bouche de décharge (110) qui ouvre et ferme.

5. Elément selon la revendication no. 1, **caractérisé en ce que**, dans l'extrême le plus étroit, il est pourvu d'une ouverture (109).

6. Procédé de fabrication de l'élément multi-usage (100) mentionné dans la revendication no. 3, **caractérisé en ce que** celui-ci est produit, en matière plastique, par injection dans un moule.

7. Procédé de fabrication selon la revendication no. 6, **caractérisé en ce que** l'élément multi-usage (100) mentionné dans la revendication no. 4 est réalisé au moyen d'une étape ultérieure dans laquelle l'élément multi-usage (100) mentionné dans la revendication 3 est coupé de façon périmétrique, presque tout autour, et la bouche (110) ainsi définie est renforcée avec deux anneaux.

8. Procédé de fabrication selon la revendication no. 6, **caractérisé en ce que** l'élément multi-usage (100) mentionné dans la revendication no. 5 est réalisé au moyen d'une étape ultérieure dans laquelle la pointe de l'élément multi-usage (100) mentionné dans la revendication 3 est coupée totalement, y compris la zone renforcée correspondante, de sorte que la surface progressivement rétrécie définit, dans la partie la plus étroite, une ouverture (109).

9. Nasse, pourvue d'un corps réticulé (200) fixé dans une des extrémités à une pièce réticulée progressivement rétrécie (100) disposée vers l'intérieur de ce corps (200) - cette pièce là servant d'entrée aux spécimens à pêcher - **caractérisée en ce que** la pièce réticulée progressivement rétrécie (100) est un élément multi--usage selon la revendication no. 5, et **en ce que** le corps (200) est fixé dans le canal périmétrique (103) dirigé vers le côté de l'ouverture (109).

10. Nasse selon la revendication no. 9, **caractérisée en ce que** le corps réticulaire (200) est fixé, dans l'autre extrémité, à un deuxième élément multi-usage (100) réticulé et progressivement rétréci, celui-ci selon une quelconque des revendications nos. 3 ou 4, et disposé vers l'extérieur de ce corps, la fixation entre le corps et l'élément multi-usage étant réalisée dans le canal périmétrique (102) dirigé vers le côté de l'ouverture la plus large de cet élément.

11. Nasse selon la revendication no. 9 ou 10, **caractérisée en ce que** la fixation du corps (200) dans les canaux périmétriques de l'élément multi-usage (100) est faite par voie de moyens de fixation rapide introduits dans les rainures (104).

12. Nasse selon quelconque des revendications no. 9 à 11, **caractérisée en ce que** l'ouverture (109) est munie d'une cagoule réductrice et/ou avec des doigts souples.

13. Nasse selon quelconque des revendications no. 9 à 12, **caractérisée en ce qu'**elle a une gaine tubulaire réticulé (201) pour l'insertion d'un tube de section inférieure avec de l'appât.

14. Méthode de montage d'une nasse, **caractérisé en ce qu'**un élément multi-usage (100) selon la revendication 5 est fixé au corps (200) de la nasse, dirigé vers l'intérieur de celui-ci, en faisant un extrême du corps se loger dans un premier canal (103) du collier (101) de renforcement structurel du dit élément et en le fixant là-bas par voie de moyens de fixation rapide introduits dans les rainures (104), et **en ce qu'**un élément multi-usage (100) selon la revendication 3 ou 4 est fixé au dit corps (200), dirigé vers l'extérieur de celui-ci, en faisant l'autre extrême du corps se loger dans un deuxième canal (102) du collier (101) de cet élément multi-usage et en le fixant là-bas par voie de moyens de fixation rapide introduits dans les rainures (104).

15. Méthode de pêche, **caractérisé en ce qu'**une nasse selon les revendications 9 et 10 est d'abord suspendue verticalement, accrochée à la profondeur désirée et sans se poser sur le fond, par câbles fixés aux moyens respectifs de fixation (300) et/ou au collier (101) de renforcement structurel de l'élément multi-usage (100) pourvu de ces moyens, laissée là-bas pour une période de temps déterminée afin de permettre aux spécimens à pêcher - attirés par l'appât - d'entrer dans la nasse à travers l'ouverture (109), restant là retenus, sauf ceux que, due à sa taille réduite, parviennent à s'échapper par une petite ouverture de fuite permanente dûment dimensionnée, **et en ce que**, plus tard, quand le temps jugé suffisant expire, la nasse est hissée à bord d'une embarcation, les spécimens capturés étant jetés soit par une fenêtre existante dans le corps (200), soit par la bouche de décharge (110) qui s'ouvre et se ferme, lorsque celle-ci est ouverte et la nasse est mise à l'envers.
